# EUROPEAN PATENT APPLICATION

(11) **EP 4 550 355 A2**
(43) Date of publication of application: **07.05.2025**
(21) Application number: 24209445.6
(22) Date of filing: 29.10.2024
(51) Int. Cl.: G21B 1/23, H01S 3/00

(54) **SYSTEM AND METHOD FOR BEAM SHAPED LASER COUPLED TO OPTICAL CAVITY**

(30) Priority: 02.11.2023 US 202318500952
(71) Applicant: Blue Laser Fusion, Inc., Palo Alto, CA 94301 (US)
(72) Inventor: COHEN, Trevor E., Goleta, CA 93117 (US); OHTA, Hiroaki, Goleta, CA 93117 (US); NAKAMURA, Shuji, Goleta, CA 93117 (US)
(74) Representative: Herrero & Asociados, S.L.

(57) **Abstract**

In an example, according to the present invention, techniques related generally to fusion energy generation are provided. In particular, the present invention provides a system and method for fusion energy using a high intensity pulse or CW laser generation system, and related methods. More particularly, the present invention provides for dynamic beam shaping of a light source for laser fusion.

## Description

### BACKGROUND OF INVENTION

The present invention relates generally to fusion energy generation techniques. In particular, the present invention provides a system and method for fusion energy using a high intensity pulse laser generation system, and related methods. More particularly, the present invention provides for dynamic beam shaping of a light source for laser fusion. Merely by way of example, the invention can be applied to a variety of applications, including energy generation for power, spaceships, travel, other vehicles for air, land, and water, defense applications (e.g., satellite, aerospace, land and missile defense, submarines, boats), biotechnology, chemical, mechanical, electrical, and communication and/or data applications.

From the beginning of time, human beings have developed energy sources from natural materials such as wood, coal, oil, and gas products. Unfortunately, burning wood and coal leads to major pollution issues, including adding undesirable carbon particles into the atmosphere. Oil and gas products also have similar limitations and have been a leading cause of "Global Warming." Renewable energy sources including nuclear, wind, hydroelectric, and solar are promising. However, such renewable energy sources have other shortcomings. Wind only works if the wind is blowing. Solar cannot be used when the sun goes down. Hydroelectric is limited to areas with water, and nuclear, although promising, has had major problems in generating waste and unreliable and dangerous reactors. One other promising energy source has been fusion energy.

Fusion energy is a type of energy production that occurs when two atomic nuclei fuse together, releasing a large amount of energy in the process. It is considered a potential source of clean and abundant energy, as the fuel for fusion reactions (mainly hydrogen) is abundant on Earth and the reactions produce no greenhouse gases or other harmful pollutants.

There are two main approaches to achieving fusion reactions: inertial confinement fusion (ICF) and magnetic confinement fusion (MCF).

Inertial confinement fusion (ICF) involves using high-energy lasers or particle beams to compress and heat a small pellet of hydrogen fuel, causing it to fuse. The fuel is typically a mixture of deuterium and tritium, two isotopes of hydrogen. The fuel is contained within a small, spherical capsule called a hohlraum, which is placed at the center of a chamber filled with high-energy lasers or particle beams. When the lasers or particle beams are fired at the hohlraum, they create a uniform layer of x-rays that uniformly heat and compress the fuel inside the hohlraum. This causes the fuel to reach the necessary temperature and pressure conditions for fusion to occur.

The main advantage of ICF is that it can potentially produce fusion reactions with a relatively small amount of fuel and at a relatively low cost. However, the process is still in the experimental stage and there are significant technical challenges to before it can be considered a practical source of energy.

Magnetic confinement fusion (MCF) involves using strong magnetic fields to contain and heat a plasma (a hot, ionized gas) of hydrogen fuel, causing it to fuse. The most common type of MCF is called tokamak fusion, which uses a toroidal (doughnutshaped) chamber to contain the plasma. The plasma is held in the center of the chamber by strong magnetic fields, which are created by running current through a set of coil windings around the chamber. The plasma is heated by injecting energy into it, either through particle beams or through electromagnetic waves.

The main advantage of MCF is that it has the potential to produce fusion reactions on a larger scale, making it more suitable for generating electricity. However, it is a more complex and costly process than ICF and there are still significant technical challenges to overcome before it can be considered a practical source of energy.

Both ICF and MCF have made significant progress in recent years and there are several experimental facilities around the world working on these technologies. However, achieving sustained fusion reactions with net energy production (meaning the energy produced by the fusion reactions is greater than the energy required to initiate and sustain the reactions) remains a major technical challenge.

There are also other approaches to fusion energy being explored, such as magnetized target fusion and muon-catalyzed fusion. However, these approaches are still in the early stages of development. It is not yet clear if fusion energy will be viable as a source of energy.

From the above, fusion energy has the potential to be a clean and abundant source of energy, but significant technical challenges must be overcome before it can be considered a practical source of energy.

### SUMMARY OF INVENTION

In an example, according to the present invention, techniques related generally to fusion energy generation are provided. In particular, the present invention provides a system and method for fusion energy using a high intensity pulse or CW laser generation system, and related methods. More particularly, the present invention provides for dynamic beam shaping of a light source for laser fusion. Merely by way of example, the invention can be applied to a variety of applications, including energy generation for power, spaceships, travel, other vehicles for air, land, and water, defense applications (e.g., satellite, aerospace, land and missile defense, submarines, boats), biotechnology, chemical, mechanical, electrical, and communication and/or data applications.

In an example, the present invention provides a laser system comprising a pulse laser device (or laser device) configured to emit a laser beam. The system has a beam splitter device coupled to the pulse laser device. The beam splitter is configured to receive the laser beam and divide the laser beam into N paths, where N is an integer from 2 to 1000, among others. Each laser beam in each path is amplified from a first energy level to a second energy level, and each laser beam in each path is phase matched to a predetermined polarization. In an example, the system has a combiner device configured to receive the N laser beams and configured to spatially or temporarily (e.g., time based) combine the N laser beams into an amplified pulse. The system has, optionally, an auxiliary device (e.g., filter device) coupled to the combiner device, and configured to shape the amplified pulse from a first Gaussian profile into a second Gaussian profile. Alternatively, a combiner device can be configured to be a filter device. The system has a Fabry Perot cavity configured to receive the amplified pulse. The cavity has a first mirror device and a second mirror device, and a free space defined between the first mirror device and the second mirror device to form a pair of mirror devices such that the amplified pulse propagating from the pulse laser device increases in energy intensity from a first intensity to a second intensity to an Mth intensity for M cycles of the amplified pulse propagating between the pair of mirror devices, where M is greater than 1,000 or 10,000 cycles. In an example, the laser beam is continuous wave, rather than pulsed.

In an alternative example, the present invention provides a laser system. The system has a pulse laser device configured to emit a laser beam. The system has a beam splitter device coupled to the pulse laser device, and configured to receive the laser beam and divide the laser beam into N paths, where N is an integer from 2 to 1000, among others. Each laser beam in each path is amplified from a first energy level to a second energy level, and each laser beam in each path is phase matched to a predetermined polarization. In an example, the system has a combiner device configured to receive the N laser beams and configured to spatially combine the N laser beams into an amplified pulse. The system has a auxiliary device coupled to the combiner device, and configured to shape the amplified pulse from a first Gaussian profile into a second Gaussian profile. In an example, the system has a Fabry Perot cavity configured to receive the amplified pulse. The cavity has a first mirror device and a second mirror device, and a free space defined between the first mirror device and the second mirror device to form a pair of mirror devices such that the amplified pulse propagating from the pulse laser device increases in energy intensity from a first intensity to a second intensity to an Mth intensity for M cycles of the amplified pulse propagating between the pair of mirror devices, where M is greater than 1,000 or 10,000 cycles, among others. In an example the system has an optical mode filter spatially disposed within a region of the Fabry Perot cavity, and configured to reflect a parasitic optical mode from the Fabry Perot cavity to maintain a fundamental latest mode or lower harmonic mode exclusively. The first and second mirror device are attached to a thermal sink (e.g., heat dissipation system) to maintain its temperature within a desired predetermined range.

Depending upon the example, the present invention can achieve one or more of these benefits and/or advantages. In an example, the present invention provides a fusion energy system including a high intensity pulse or CW laser system configured with a reactor in a compact and spatially efficient system and related methods. In an example, the high intensity pulse or CW laser system provides enough energy to ignite and sustain fusion energy within the reactor. In an example, the present invention offers advantages of generating fusion power through an efficient size, weight, and cost using the present high intensity lasers. These and other benefits and/or advantages are achievable with the present device and related methods. Further details of these benefits and/or advantages can be found throughout the present specification and more particularly below.

### BRIEF DESCRIPTION OF THE DRAWINGS

Figure 1 is a simplified diagram of a laser system coupled to a Fabry Perot cavity according to an example of the present invention.
Figure 2 is a simplified diagram of a fusion reactor configured with the laser system and Fabry Perot cavity.
Figure 3 is a more detailed diagram of a laser system according to an example of the present invention.
Figure 4 is a more detailed diagram of a Fabry Perot cavity with optical mode filters according to an example of the present invention.
Figure 5 is a simplified diagram of an error control process for the laser system of Figure 3 according to an example of the present invention.
Figure 6 is a simplified diagram of an electro optic modulator of the laser system of Figure 3 according to an example of the present invention.
Figure 7 is a simplified diagram illustrating dynamic laser beam control for mirror deformation according to an example of the present invention.
Figure 8 is a simplified diagram illustrating the removal of parasitic optical modes by reflecting the modes using an optical mode filter.

### DETAILED DESCRIPTION OF THE EXAMPLES

As background, since conceptualization of a laser based fusion reactor for energy production, many challenges in engineering a laser capable of delivering a high enough power and uniform pulse profile to efficiently ignite the target fuel exist.¹ The National Ignition Facility of Lawrence Livermore National Laboratory in Livermore, California, for example, circumvented a poor beam uniformity of their laser system by performing indirect fusion, firing the lasers at the walls of the reactor chamber producing incoherent high energy x-rays that could more evenly irradiate the spherical fuel pellet at the cost of major energy losses to the system.² Direct inertial confinement laser fusion is more energy efficient but requires much higher tolerances of laser beam properties such as beam shape and power uniformity, intensity, and phase matching upon reaching the target fuel.³ Thus, it is desirable to manufacture a seed laser with a TEM₀₀ gaussian profile and high shot-to-shot power stability as well as to efficiently amplify the beam to megawatt (MW) power while maintaining a uniform shape.

A method capable of amplifying a laser to high average powers is the use of a high-finesse external Fabry-Perot cavity, also known as an Optically Enhanced Cavity (OEC), which is described in "BORON FUEL CONFIGURED TO A CAVITY WITH A LASER LIGHT SOURCE FOR A FUSION SYSTEM" listed in U.S. Patent Application No. 18/172,885 filed 02/22/2023, commonly owned, and hereby incorporated by reference in its entirety. OEC seeds either a CW or pulsed laser into a high-reflectivity laser cavity, typically either in a 2 or 4 mirror bowtie orientation, in which the intracavity laser temporally and spatially intersects with the next seeded laser pulse, coherently combining and amplifying the intracavity pulse upon each roundtrip. When the seed pulses are successfully mode and phase matched to the pulse train confined within the cavity, typically using the Pound-Drever-Hall method, amplification of laser pulses to MW powers from a single Watt seed laser source has been reported so far with as high as 85% combining efficiency.⁵ While the mirrors used are desirably highly reflective to generate a high-finesse cavity on the order of 1×10⁵ at the high laser powers necessary to ignite a fusion fuel, the small fraction of the power absorbed by the cavity mirrors can cause significant thermal-elastic deformation to the mirror face. These deformations result in scattering into degenerate higher order TEM modes greatly reducing the amplification efficiency and beam shape of the system and can cause further deformation and wavefront distortion if not controlled.¹¹⁻¹⁵

Various solutions have been applied to high-finesse cavities to counteract the expansion of the mirror face and mitigate the generation of these higher order modes. Spatial filtering applies a mask and collimates the laser pulse to create a uniform profile, but results in large power losses.¹⁶ Gravitational wave detector facilities such as a Laser Interferometer Gravitational-Wave Observatory (LIGO) that generate as high as a 750 kW continuous wave laser in their Fabry-Perot Michelson interferometer arms utilize ring heaters to expand the backside of their optics to compensate for the thermal distortion on the cavity face.¹⁷ While heating is effective for cavities that maintain high intracavity laser powers over long periods of time (on the order of hours for a LIGO), this method provides less dynamic control of the optic shape and heating location, especially on smaller mirrors less then 1" in diameter, due to slow dissipation of heat in an ultra-high vacuum system.¹⁷⁻²⁰

Instead of modifying the geometry of the mirror, we propose to adjust a beam shape of the seed laser using dynamic beam shaping. Dynamic beam shaping lasers utilize coherent beam combination, a technique in which 2^{N} laser pulses are individually amplified and then combined to produce a single high power laser pulse.²¹⁻²³ By coupling an acousto-optic and electro-optic modifier (as used herein AOM and EOM respectively) into the beam path, it is possible to adjust the phase and amplitude of each individual pulse. Combination of these phase-controlled pulses results in the formation of various interference patterns and fine control of the laser shape and focus. Through the coupling of a dynamic beam shaping seed laser to a high-finesse external cavity, it will be possible to: (1) adjust the beam shape and focus at MHz frequencies to match in real time the change in the shape of the mirror face after thermos-elastic deformation and (2) finely control the phase and focal point of the injection laser after each roundtrip to promote higher efficiency combination.

In an example, the system_a dynamic beam shaping injection laser and a high-finesse external Fabry-Perot cavity for amplification. For the dynamic beam shaping laser, a master oscillator power amplifier (MOPA) capable of generating a TEM₀₀ nanosecond pulse width laser and as high as 1 J per pulse will be used. Coherent beam combination requires 2^{N} laser pulses to correctly combine into the single amplified pulse. Additionally, there is little change in the combination efficiency when scaled to as even as high as 64 pulses.²² The laser that enters the OEC must be seeded at a 1MHz repetition rate to match the roundtrip distance of the cavity (300 m). As such, the dynamic beam shaping laser must fire at a 2^{N} MHz rate depending on the number of pulses necessary to combine to reach the target power. The laser pulses are directed into an EOM that adjusts the phase of each pulse. After amplification through a fiber, the pulses are interferometrically combined to generate the specified shape to couple to the OEC.

For the high-finesse cavity, both a two-mirror and a four-mirror bowtie will be explored, but only the two-mirror design will be discussed below. Each mirror in the cavity has 40 cm diameters, 40 mm thick, with a 150 m radius of curvature. The reflectivity of the concave and planar surfaces are 99.99999% and 0.1% to enable efficient injection of the laser pulse while maintaining a high finesse. The coatings on the concave faces are manufactured with proprietary technology. The entire beam line will be placed under high vacuum (on the order of 1×10⁻⁶-1×10⁻⁸ torr) to prevent absorption and scattering by molecules in the atmosphere. The initial injection laser will consist of a gaussian pulse as no deformation on the mirror faces has occurred. As higher energy pulses travel through the cavity after each roundtrip, the concave mirrors will begin to deform in a parabolic shape from the center of the mirror, resulting in a phase mismatch, defocusing of the laser, and the formation of degenerate higher order TEM modes. An error feedback loop utilizing the Pound-Drever-Hall method will be installed to adjust the mirror mount positions to sustain a consistent mode lock.^{24,25} To account for the expansion of the mirror face, the seed laser will be interferometrically modified to adjust the shape of the laser pulse to match the shape of the deformed mirror after each roundtrip. This will prevent scattering into higher order modes and more efficient amplification. While the shape and focus of the seed laser will be adjusted to account for the mirror deformation, the intracavity pulse cannot be modified, resulting in some, but significantly less, high order mode generation. To suppress this propagation, two D-shaped mirrors positioned along the two lateral axes will be installed to reflect these higher order modes into the walls of the reactor.^{4,6} Each mirror will be placed on a motorized mount so that only the higher order modes intersect with the knife-edge planar surface.

Through combination of the dynamic pulse shaping seed laser and OEC amplification cavity, it will be possible to adjust the shape, focus, and phase of the injection laser at MHz frequency. This dynamic shape control will lead to higher amplification efficiency and less losses due to scattering effects, allowing us to achieve the MW laser power necessary to compress the fusion fuel at a higher wall-plug efficiency.

Further details of the present system and related methods can be found throughout the present specification and more particularly below.

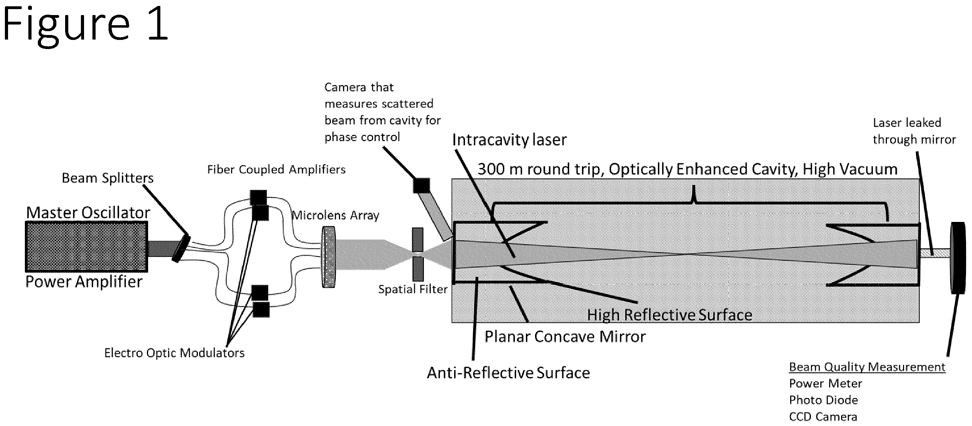

Figure 1 is a simplified diagram of a laser system coupled to a Fabry Perot cavity according to an example of the present invention. As shown is a laser system. The laser system has a pulse laser device configured to emit a laser beam. The pulse laser device has a master oscillator configured with a power amplifier. The pulse laser device emits a laser with pulse width on the order of nanoseconds at MHz frequencies and near IR wavelength such as those found at IPG Photonics Corporation, but can be others.

The system has a beam splitter device coupled to the pulse laser device. The beam splitter is configured to receive the laser beam and divide the laser beam into N paths, which are separate. N is an integer from 2 to 1000, but can be higher in other applications. In an example, the beam splitter is a polarizing beam splitter such as those found at Thorlabs, Inc. but can be others.

Each laser beam in each path is amplified from a first energy level to a second energy level. Each beam is amplified using an ytterbium doped optical fiber amplifier device such as those found at Thorlabs, Inc. but can be others.

Each laser beam in each path is phase matched to a predetermined polarization such that each amplitude is aligned to a reference point. Phase matching occurs using an electro optic modulator such as a fiber-coupled electro optic modulator found at Thorlabs, Inc. but can be others.

As shown, the device has a combiner device configured to receive the N laser beams and configured to spatially combine the N laser beams into an amplified pulse. The combiner device is also a polarizing beam splitter such as those found at Thorlabs, Inc. but can be others.

As shown, the device has a filter device coupled to the combiner device, and configured to shape the amplified pulse from a first Gaussian profile into a second Gaussian profile. The second Gaussian profile is substantially error free. In an example, the filter device can be an auxiliary device or the like. Additionally, the first Gaussian profile and the second Gaussian profile can be any similar or Gaussian like profile, which is a slight variation of Gaussian.

The pulse laser device is coupled to a Fabry Perot cavity configured to receive the amplified pulse. The Fabry Perot cavity has a first mirror device and a second mirror device, and a free space defined between the first mirror device and the second mirror device to form a pair of mirror devices. The pair of mirror devices is configured with the amplified pulse propagating from the pulse laser device to increase in energy intensity from a first intensity to a second intensity to an Mth intensity for M cycles of the amplified pulse propagating between the pair of mirror devices. M is greater than 10,000 cycles, but can be fewer. The first mirror device and second mirror device substrate are composed of silicon carbide.

Further details of an optical enhancement cavity using the Fabry Perot cavity is found in a patent application titled "A FAST IGNITION FUSION SYSTEM AND METHOD," in the names of Shuji Nakamura and Hiroaki Ohta listed under U.S. Serial No. 18/319,368 filed 5/17/23, commonly assigned, and hereby incorporated by reference in their entirety.

As shown, the device also has a detection device coupled to a portion of one of the mirror devices, the detection device is configured to measure a signal from the amplified pulse to detect a phase and a shape of the amplified pulse. The detection device is a charge coupled device (CCD) camera coupled to a portion of one of the mirror devices. The detection device is configured to measure a signal from the amplified pulse to detect a phase and a shape of the amplified pulse. The CCD camera comprises a plurality of detectors configured to detect a signal of electromagnetic radiation from about 400nm to 2000nm. An example of the CCD camera is found at Princeton Instruments, but can be others.

The system also has a controller system coupled to the pulse laser device and coupled to a detection device. The controller system coupled to the pulse laser device and the detection device such that a feedback signal is detected from the detection device and sent to the controller device to adjust a phase, shape, and focus of the laser beam from the pulse laser device. Additionally, the controller device adjusts a phase, shape, and focus of the laser beam from the pulse laser device to adjust for a deformation of either pair of mirrors. In an alternative example, the system has a controller system coupled to the pulse laser device and the detection device such that a feedback signal from the amplified pulse is detected from the detection device and sent to the controller device to adjust a phase, shape, and focus of the laser beam from the pulse laser device to adjust for a deformation of either pair of mirrors caused by the increase in energy intensity.

In an example, the controller system can be any suitable type, which can control beam shape, phase, and other parameters of a laser that enables manipulation and optimization of the laser's output. In an example, the controller is equipped with control logic and algorithms tailored to adjust the laser's beam shape, phase, and other parameters. These algorithms can be customizable to meet specific requirements. In an example, the controller interfaces with a set of beam shaping optics, which may include lenses, optical elements, spatial light modulators (SLMs), or other optical components designed to modify the laser beam's profile and shape. In an example, for phase control, the controller interfaces with phase modulators, such as liquid crystal devices or electro-optic modulators, that allow for precise phase adjustments of the laser beam. In an example, the controller receives feedback from various sensors and detectors, which can include photodiodes, wavefront sensors, interferometers, or cameras. These sensors provide information about the laser's parameters, including intensity, polarization, phase, and beam profile. In an example, the controller operates in a closed-loop control system, continuously comparing the detected data with the desired parameters or setpoints. In an example, based on the feedback, the controller calculates and implements adjustments to the beam shaping optics and phase modulators to achieve the desired beam characteristics, including beam profile, divergence, focus, and phase distribution.

In an example, the controller includes a graphical user interface (GUI) or software application. This interface allows users to input their desired laser parameters and monitor the system's performance. Of course, there can be other variations, modifications, and alternatives.

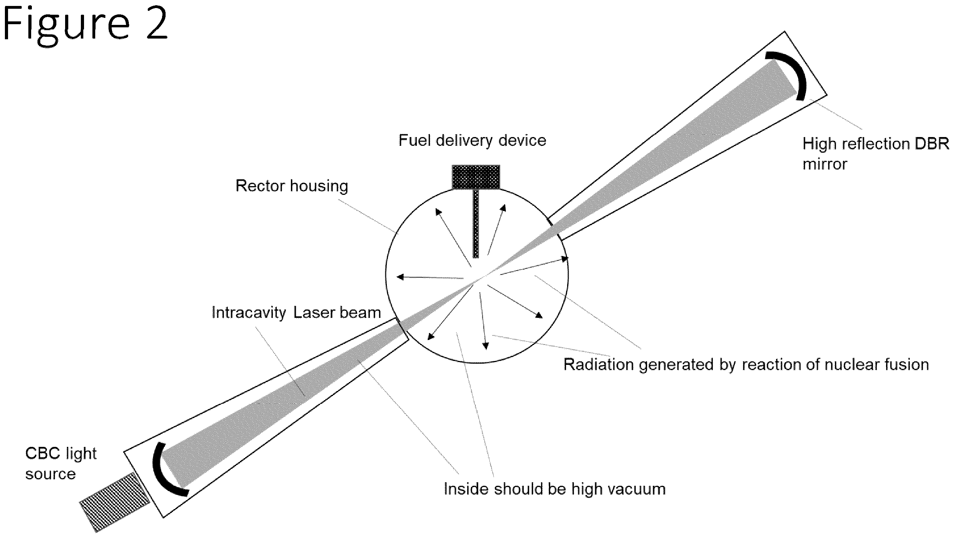

Figure 2 is a simplified diagram of a fusion reactor configured with the laser system and Fabry Perot cavity. As shown, the Fabry Perot cavity is configured to a reactor device configured for a fusion reaction. The system has a dispenser device configured to inject a target into the reactor device such that the target device interacts with the amplified pulse to initiate a fusion reaction.

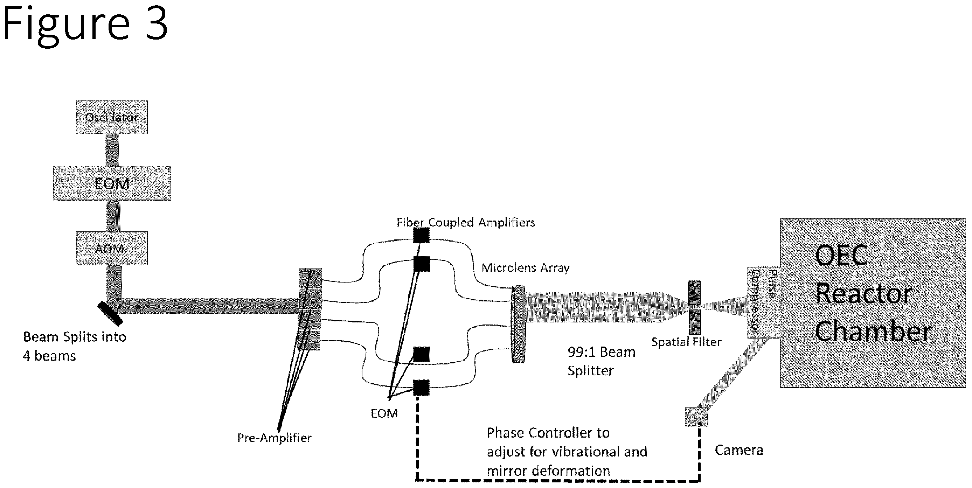

Figure 3 is a more detailed diagram of a laser system according to an example of the present invention. As shown, the pulse laser device comprises an oscillator device coupled to an electro optic modulating configured to adjust a phase of the laser beam, and an acousto-optic modulator configured to adjust an amplitude of the laser beam before being received by the beam splitter device.

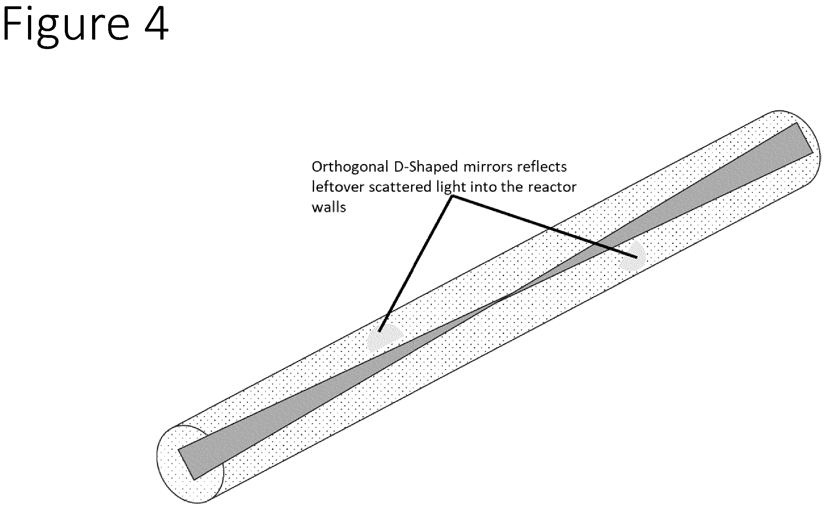

Figure 4 is a more detailed diagram of a Fabry Perot cavity with optical mode filters according to an example of the present invention. As shown is the Fabry Perot cavity configured to receive the amplified pulse, and comprising a first mirror device and a second mirror device, and a free space defined between the first mirror device and the second mirror device to form a pair of mirror devices. The amplified pulse propagating from the pulse laser device increases in energy intensity from a first intensity to a second intensity to an Mth intensity for M cycles of the amplified pulse propagating between the pair of mirror devices, where M is greater than 10,000 cycles. The first mirror device and second mirror device are composed of silicon carbide.

Additionally, the cavity is configured with an optical mode filter spatially disposed within a region of the Fabry Perot cavity. In an example, the optical mode filter is configured to reflect a parasitic optical mode to a surface region of the Fabry Perot cavity to maintain a temperature of each of the mirrors to a predetermined temperature range. In an example, the predetermined range maintains a shape of each of the mirror devices. In an example, the optical mode filter transfers energy from the parasitic optical mode to a wall of the Fabry Perot cavity. Additionally, the optical mode filter comprises a knife edge mirror configured to reflect electromagnetic radiation from the parasitic optical mode. Of course, there can be other variations, modifications, and alternatives.

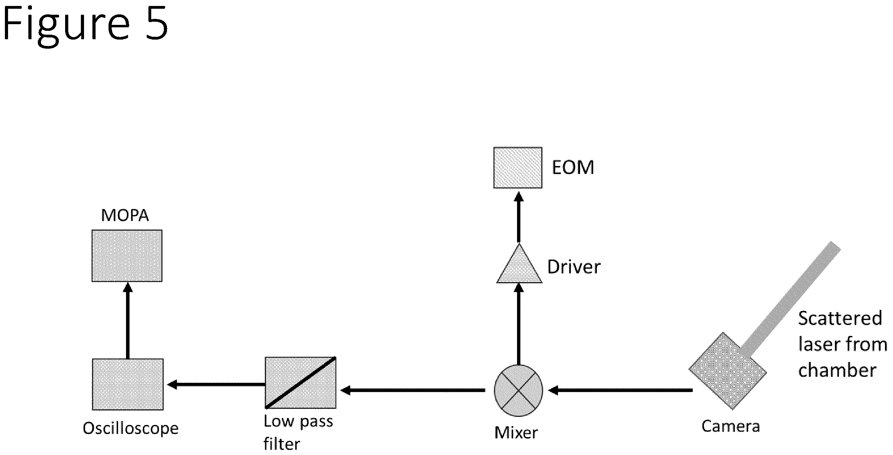

Figure 5 is a simplified diagram of an error control process for the laser system of Figure 3 according to an example of the present invention. As shown is the master oscillator system configured to generate a nanosecond pulse laser. The Fabry Perot cavity described in Figure 4 is configured to receive and amplify the laser pulse. The mirrors of the Fabry Perot cavity are configured to allow a small portion of the amplified laser pulse to escape the cavity which is detected with a CCD camera device which is configured to measure the phase and amplitude of the pulse. The signal generated from the CCD camera device is sent to a signal mixer designed to send the electronic signal to two destinations: the master oscillator system and the electro optic modulators used to adjust the phase of the amplified laser pulses. Along the path to the master oscillator system, the electronic signal passes through a low pass filter device and then sent to an oscilloscope to measure the signal. The measured signal is relayed to the electro-optic modulators to adjust the phase of the amplified laser pulses that will be injected into the Fabry Perot cavity.

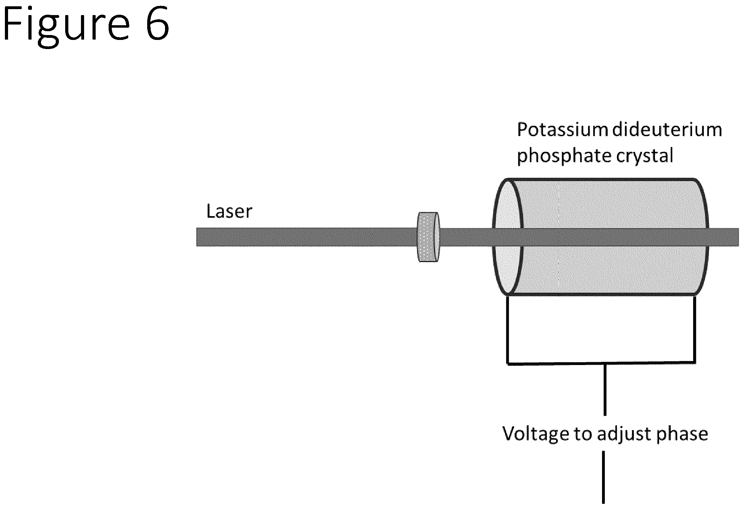

Figure 6 is a simplified diagram of an electro optic modulator of the laser system of Figure 3 according to an example of the present invention. As shown, the electro optic modulator receives a laser beam and traverses through the electro optic modulator material, which is coupled to a voltage source. The voltage adjusts a phase of the laser beam to a desired phase in relationship to other divided beams. An example of the material can include a potassium di-deuterium phosphate crystal, among others.

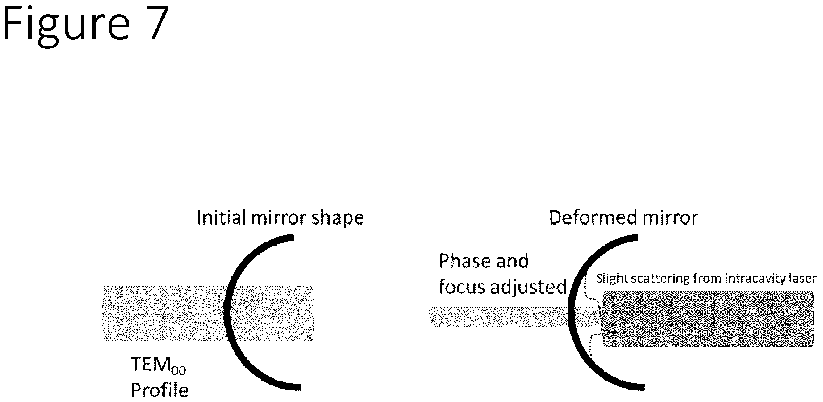

Figure 7 is a simplified diagram illustrating dynamic laser beam control for mirror deformation according to an example of the present invention. As shown is an initial mirror shape, which has a predetermined curve. A deformed mirror is also shown. The deformed mirror has been subjected to an amplified laser pulse that caused thermal expansion of the mirror leading to deformation. The deformation is corrected in whole or part by adjusting a phase, shape, and/or focus of the laser beam. Accordingly, the deformation is corrected using the present feedback and correction techniques of the present invention.

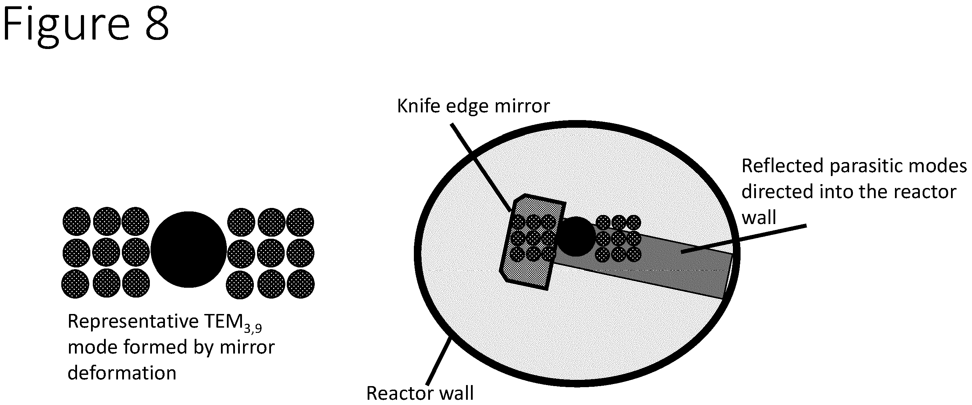

Figure 8 is a simplified diagram illustrating the multimode laser pulse generated by mirror deformation in the Fabry Perot cavity and the optical mode filtering according to an example of the present invention. As shown are the parasitic optical modes generated upon reflection off of the deformed mirror face. The deformed mirror has been subjected to an amplified laser pulse that caused thermal expansion of the mirror leading to deformation. The parasitic optical modes are intersected by the optical mode filters and directed to a wall of the Fabry Perot cavity. The optical mode filters comprise of a knife edge mirror configured to reflect electromagnetic radiation from the parasitic optical mode.

Further examples of the present invention can be found throughout the present specification and more particularly below.

In an example, the present invention provides a laser system comprising a pulse laser device configured to emit a laser beam. The system has a beam splitter device coupled to the pulse laser device. The beam splitter is configured to receive the laser beam and divide the laser beam into N paths, where N is an integer from 2 to 1000, among others. Each laser beam in each path is amplified from a first energy level to a second energy level, and each laser beam in each path is phase matched to a predetermined polarization. In an example, the system has a combiner device configured to receive the N laser beams and configured to spatially combine the N laser beams into an amplified pulse. The system has an auxiliary device coupled to the combiner device, and configured to shape the amplified pulse from a first Gaussian profile into a second Gaussian profile. The system has a Fabry Perot cavity configured to receive the amplified pulse. The cavity has a first mirror device and a second mirror device, and a free space defined between the first mirror device and the second mirror device to form a pair of mirror devices such that the amplified pulse propagating from the pulse laser device increases in energy intensity from a first intensity to a second intensity to an Mth intensity for M cycles of the amplified pulse propagating between the pair of mirror devices, where M is greater than 10,000 cycles.

In an example, the system further has a detection device coupled to a portion of one of the mirror devices. The detection device is configured to measure a signal from the amplified pulse to detect a phase and a shape of the amplified pulse.

In an example, the system also has a charge coupled device (CCD) camera coupled to a portion of one of the mirror devices, the CCD camera is configured to measure a signal from the amplified pulse to detect a phase and a shape of the amplified pulse. The CCD camera comprising a plurality of detectors configured to detect a signal of electromagnetic radiation from about 400nm to 2000nm.

In an example, the system has a controller system coupled to the pulse laser device and coupled to a detection device. In an example, the system has a controller system coupled to the pulse laser device and the detection device such that a feedback signal is detected from the detection device and sent to the controller device to adjust a phase, shape, and focus of the laser beam from the pulse laser device.

In an example, the system has a controller system coupled to the pulse laser device and a detection device such that a feedback signal from the amplified pulse is detected from the detection device and sent to the controller device to adjust a phase, shape, and focus of the laser beam from the pulse laser device to adjust for a deformation of either pair of mirrors. The system has a controller system coupled to the pulse laser device and a detection device such that a feedback signal from the amplified pulse is detected from the detection device and sent to the controller device to adjust a phase, shape, and focus of the laser beam from the pulse laser device to adjust for a deformation of either pair of mirrors caused by the increase in energy intensity in an alternative example.

In an example, the Fabry Perot cavity is configured to a reactor device configured for a fusion reaction. In an example, the system also has a reactor device coupled to the Fabry Perot cavity; and a dispenser device configured to inject a target into the reactor device such that the target device interacts with the amplified pulse to initiate a fusion reaction. In an example, the pulse laser device comprises an oscillator device coupled to an electro optic modulating configured to adjust a phase of the laser beam, and an acousto-optic modulator configured to adjust an amplitude of the laser beam before being received by the beam splitter device.

In an example, the present invention provides a laser system. The system has a pulse laser device configured to emit a laser beam. The system has a beam splitter device coupled to the pulse laser device, and configured to receive the laser beam and divide the laser beam into N paths, where N is an integer from 2 to 1000, among others. Each laser beam in each path is amplified from a first energy level to a second energy level, and each laser beam in each path is phase matched to a predetermined polarization. In an example, the system has a combiner device configured to receive the N laser beams and configured to spatially combine the N laser beams into an amplified pulse. The system has an auxiliary device coupled to the combiner device, and configured to shape the amplified pulse from a first Gaussian profile into a second Gaussian profile. In an example, the system has a Fabry Perot cavity configured to receive the amplified pulse. The cavity has a first mirror device and a second mirror device, and a free space defined between the first mirror device and the second mirror device to form a pair of mirror devices such that the amplified pulse propagating from the pulse laser device increases in energy intensity from a first intensity to a second intensity to an Mth intensity for M cycles of the amplified pulse propagating between the pair of mirror devices, where M is greater than 10,000 cycles, among others. In an example the system has an optical mode filter spatially disposed within a region of the Fabry Perot cavity, and configured to reflect a parasitic optical mode to a surface region of the Fabry Perot cavity to maintain a temperature of each of the mirrors to a predetermined temperature range.

In an example, the predetermined range maintains a shape of each of the mirror devices. In an example, the shape is maintained to prevent any detrimental influences to the pulse laser beam. In an example, the optical mode filter transfers energy from the parasitic optical mode to a wall of the Fabry Perot cavity. In an example, the optical mode filter comprises a knife edge mirror configured to reflect electromagnetic radiation from the parasitic optical mode.

In an example, each of the first mirror device and the second mirror device comprises a sapphire, a quartz, or a silicon carbide, or combinations. In an example, each of the first mirror device and the second mirror device is directly or indirectly attached to a thermal sink including a heat dissipation and cooling system with cooling fluid comprising water, other liquid circulating system, or a cooled gas cooling system to maintain a temperature of each of the first mirror device and the second mirror device within a predetermined temperature range. In an example, the auxiliary device comprises an electro optic modulator configured to adjust a phase of the laser beam, and an acousto-optic modulator configured to adjust an amplitude of the laser beam before being received by the beam splitter. In an example, the Fabry Perot cavity is characterized by an average laser power of more than 1 MegaWatt.

### References:

**1.** Post, R. F. Controlled Fusion Research - an Application of the Physics of High Temperature Plasmas. Rev Mod Phys 1956, 28 (3), 338-362. DOI: DOI 10.1103/RevModPhys.28.338.
**2.** Lindl, J. Development of the Indirect-Drive Approach to Inertial Confinement Fusion and the Target Physics Basis for Ignition and Gain. Phys Plasmas 1995, 2 (11), 3933-4024. DOI: Doi 10.1063/1.871025.
**3.** Bodner, S. E.; Colombant, D. G.; Gardner, J. H.; Lehmberg, R. H.; Obenschain, S. P.; Phillips, L.; Schmitt, A. J.; Sethian, J. D.; McCrory, R. L.; Seka, W.; et al. Direct-drive laser fusion: Status and prospects. Phys Plasmas 1998, 5 (5), 1901-1918. DOI: Doi 10.1063/1.872861.
**4.** Amoudry, L.; Wang, H.; Cassou, K.; Chiche, R.; Dupraz, K.; Martens, A.; Nutarelli, D.; Soskov, V.; Zomer, F. Modal instability suppression in a high-average-power and high-finesse Fabry-Perot cavity. Appl Optics 2020, 59 (1), 116-121. DOI:
   10.1364/Ao.59.000116.
**5.** Carstens, H.; Lilienfein, N.; Holzberger, S.; Jocher, C.; Eidam, T.; Limpert, J.; Tunnermann, A.; Weitenberg, J.; Yost, D. C.; Alghamdi, A.; et al. Megawatt-scale average-power ultrashort pulses in an enhancement cavity. Opt Lett 2014, 39 (9), 2595-2598. DOI: 10.1364/O1.39.002595.
**6.** Lilienfein, N.; Hofer, C.; Holzberger, S.; Matzer, C.; Zimmermann, P.; Trubetskov, M.; Pervak, V.; Pupeza, I. Enhancement cavities for few-cycle pulses. Opt Lett 2017, 42 (2), 271-274. DOI: 10.1364/O1.42.000271.
**7.** Liu, X.; Lu, X. Y.; Wang, H.; Yan, L. X.; Li, R. K.; Huang, W. H.; Tang, C. X.; Chiche, R.; Zomer, F. Continuous-wave optical enhancement cavity with 30-kW average power. Chinese Phys B 2023, 32 (3). DOI: ARTN 03420610.1088/1674-1056/ac873e.
**8.** Sulzer, P.; Hogner, M.; Raab, A. K.; Furst, L.; Fill, E.; Gerz, D.; Hofer, C.; Voronina, L.; Pupeza, I. Cavity-enhanced field-resolved spectroscopy. Nat Photonics 2022, 16 (10), 692-+. DOI: 10.1038/s41566-022-01057-0.
**9.** Zhang, J.; Hua, L. Q.; Yu, S. G.; Chen, Z.; Liu, X. J. Femtosecond enhancement cavity with kilowatt average power. Chinese Phys B 2019, 28 (4). DOI: Artn 04420610.1088/1674-1056/28/4/044206.
**10.** Simonin, A.; Agnello, R.; Bechu, S.; Bernard, J. M.; Blondel, C.; Boeuf, J. P.; Bresteau, D.; Cartry, G.; Chaibi, W.; Drag, C.; et al. Negative ion source development for a photoneutralization based neutral beam system for future fusion reactors. New J Phys 2016, 18. DOI: Artn 125005 10.1088/1367-2630/18/12/125005.
**11.** Fahr, S.; Clausnitzer, T.; Kley, E. B.; Tunnermann, A. Reflective diffractive beam splitter for laser interferometers. Appl Optics 2007, 46 (24), 6092-6095. DOI: Doi 10.1364/Ao.46.006092.
**12.** Remo, J. L. Light-Scattering Described in the Mode Picture - Comment. Appl Optics 1995, 34 (28), 6561-6563. DOI: Doi 10.1364/Ao.34.006561.
**13.** Shu, H.; Bass, M. Modeling the reflection of a laser beam by a deformed highly reflective volume Bragg grating. Appl Optics 2007, 46 (15), 2930-2938. DOI: Doi 10.1364/Ao.46.002930.
**14.** Bullington, A. L.; Lantz, B. T.; Fejer, M. M.; Byer, R. L. Modal frequency degeneracy in thermally loaded optical resonators. Appl Optics 2008, 47 (15), 2840-2851. DOI: Doi 10.1364/Ao.47.002840.
**15.** Lu, P. P.; Bullington, A. L.; Beyersdorf, P.; Traeger, S.; Mansell, J.; Beausoleil, R.; Gustafson, E. K.; Byer, R. L.; Fejer, M. M. Wavefront distortion of the reflected and diffracted beams produced by the thermoelastic deformation of a diffraction grating heated by a Gaussian laser beam. J Opt Soc Am A 2007, 24 (3), 659-668. DOI: Doi 10.1364/Josaa.24.000659.
**16.** Favier, P.; Amoudry, L.; Cassou, K.; Chiche, R.; Dupraz, K.; Martens, A.; Nutarelli, D.; Soskov, V.; Zomer, F.; Courjaud, A.; et al. Optimization of a Fabry-Perot cavity operated in burst mode for Compton scattering experiments. Phys Rev Accel Beams 2018, 21 (12). DOI: ARTN 121601 10.1103/PhysRevAccelBeams.21.121601.
**17.** Brooks, A. F.; Abbott, B.; Arain, M. A.; Ciani, G.; Cole, A.; Grabeel, G.; Gustafson, E.; Guido, C.; Heintze, M.; Heptonstall, A.; et al. Overview of Advanced LIGO adaptive optics. Appl Optics 2016, 55 (29), 8256-8265. DOI: 10.1364/Ao.55.008256.
**18.** Day, R. A.; Vajente, G.; Kasprzack, M.; Marque, J. Reduction of higher order mode generation in large scale gravitational wave interferometers by central heating residual aberration correction. Phys Rev D 2013, 87 (8). DOI: ARTN 082003 10.1103/PhysRevD.87.082003.
**19.** Vajente, G. In situ correction of mirror surface to reduce round-trip losses in Fabry-Perot cavities. Appl Optics 2014, 53 (7), 1459-1465. DOI: 10.1364/Ao.53.001459.
**20.** Fiorucci, D.; Feng, J. T.; Pichot, M.; Chaibi, W. Thermal effects in high power cavities for photoneutralization of D- beams in future neutral beam injectors. Aip Conf Proc 2015, 1655. DOI: Artn 050010 10.1063/1.4916467.
**21.** Stark, H.; Buldt, J.; Muller, M.; Klenke, A.; Tunnermann, A.; Limpert, J. 23 mJ high-power fiber CPA system using electro-optically controlled divided-pulse amplification. Opt Lett 2019, 44 (22), 5529-5532. DOI: 10.1364/O1.44.005529.
**22.** Fsaifes, I.; Daniault, L.; Bellanger, S.; Veinhard, M.; Bourderionnet, J.; Larat, C.; Lallier, E.; Durand, E.; Brignon, A.; Chanteloup, J. C. Coherent beam combining of 61 femtosecond fiber amplifiers. Opt Express 2020, 28 (14), 20152-20161. DOI: 10.1364/Oe.394031.
**23.** Stark, H.; Muller, M.; Kienel, M.; Klenke, A.; Limpert, J.; Tunnermann, A. Electro-optically controlled divided-pulse amplification. Opt Express 2017, 25 (12), 13494-13503. DOI: 10.1364/Oe.25.013494.
**24.** Drever, R. W. P.; Hall, J. L.; Kowalski, F. V.; Hough, J.; Ford, G. M.; Munley, A. J.; Ward, H. Laser Phase and Frequency Stabilization Using an Optical-Resonator. Appl Phys B-Photo 1983, 31 (2), 97-105. DOI: Doi 10.1007/Bf00702605.
**25.** Jones, R. J.; Diels, J. C.; Jasapara, J.; Rudolph, W. Stabilization of the frequency, phase, and repetition rate of an ultra-short pulse train to a Fabry-Perot reference cavity. Opt Commun 2000, 175 (4-6), 409-418.

While the above is a full description of the specific examples, various modifications, alternative constructions and equivalents may be used. As an example, the packaged device can include any combination of elements described above, as well as outside of the present specification. In an example, the high intensity laser forms a resonator between the pair of mirror devices using constructive interference of each of the laser beams. In an example, the first path with the high intensity pulse laser is provided in a resonator device. In an example, the present invention provides a system and method to generate aa concentric or spherical resonator within a reaction region to focus laser light at a center of the reactor. Additionally, the terms first, second, third, and final do not imply order in one or more of the present examples. Therefore, the above description and illustrations should not be taken as limiting the scope of the present invention which is defined by the appended claims.

## Claims

1. A laser system comprising:
a pulse laser device configured to emit a laser beam;
a beam splitter device coupled to the pulse laser device, and configured to receive the laser beam and divide the laser beam into N paths, where N is an integer from 2 to 1000, each laser beam in each path is amplified from a first energy level to a second energy level, and each laser beam in each path is phase matched to a predetermined polarization;
a combiner device configured to receive the N laser beams and configured to spatially or temporarily combine the N laser beams into an amplified pulse;
optionally, an auxiliary device coupled to the combiner device, and configured to shape the amplified pulse from a first Gaussian profile into a second Gaussian profile;
a Fabry Perot cavity configured to receive the amplified pulse, and comprising a first mirror device and a second mirror device, and a free space defined between the first mirror device and the second mirror device to form a pair of mirror devices such that the amplified pulse propagating from the pulse laser device increases in energy intensity from a first intensity to a second intensity to an Mth intensity for M cycles of the amplified pulse propagating between the pair of mirror devices, where M is greater than 1,000 cycles.

2. The system of claim 1 further comprising a detection device coupled to a portion of one of the mirror devices, the detection device is configured to measure a signal from the amplified pulse to detect a phase and a shape of the amplified pulse; wherein the first Gaussian profile comprises a similar Gaussian like profile and the second Gaussian profile comprises a similar Gaussian like profile; where M is greater than 10,000 cycles.

3. The system of claim 1 further comprising a charge coupled device (CCD) camera coupled to a portion of one of the mirror devices, the CCD camera is configured to measure an attenuated signal from the amplified pulse to detect a phase and a shape of the amplified pulse, the CCD camera comprising a plurality of detectors configured to detect a signal of electromagnetic radiation from about 400nm to 2000nm.

4. The system of claim 1 further comprising a controller system coupled to the pulse laser device and coupled to a detection device.

5. The system of claim 1 further comprising a controller system coupled to the pulse laser device and a detection device such that a feedback signal is detected from the detection device and sent to the controller device to adjust a phase, shape, and focus of the laser beam from the pulse laser device.

6. The system of claim 1 further comprising a controller system coupled to the pulse laser device and a detection device such that a feedback signal from the amplified pulse is detected from the detection device and sent to the controller device to adjust a phase, shape, and focus of the laser beam from the pulse laser device to adjust for a deformation of either pair of mirrors.

7. The system of claim 1 further comprising a controller system coupled to the pulse laser device and a detection device such that a feedback signal from the amplified pulse is detected from the detection device and sent to the controller device to adjust a phase, shape, and focus of the laser beam from the pulse laser device to adjust for a deformation of either pair of mirrors caused by the increase in energy intensity.

8. The system of claim 1 wherein the Fabry Perot cavity is configured to a reactor device configured for a fusion reaction.

9. The system of claim 1 further comprising a reactor device coupled to the Fabry Perot cavity; and a dispenser device configured to inject a target into the reactor device such that the target device interacts with the amplified pulse to initiate a fusion reaction.

10. The system of claim 1 wherein the pulse laser device comprises an oscillator device coupled to an electro optic modulating configured to adjust a phase of the laser beam, and an acousto-optic modulator configured to adjust an amplitude of the laser beam before being received by the beam splitter device.

11. The system of claim 1 wherein each of the first mirror device and the second mirror device comprises a sapphire, a quartz, or a silicon carbide, or combinations.

12. The system of claim 1 wherein each of the first mirror device and the second mirror device is directly or indirectly attached to a thermal sink including a heat dissipation and cooling system with cooling fluid comprising water, other liquid circulating system, or a cooled gas cooling system to maintain a temperature of each of the first mirror device and the second mirror device within a predetermined temperature range.

13. The system of claim 1 wherein the auxiliary device comprises an electro optic modulator configured to adjust a phase of the laser beam, and an acousto-optic modulator configured to adjust an amplitude of the laser beam before being received by the beam splitter.

14. The system of claim 1 wherein the Fabry Perot cavity is **characterized by** an average laser power of more than 1 MegaWatt.

15. A laser system comprising:
a laser device configured to emit a laser beam;
a beam splitter device coupled to the laser device, and configured to receive the laser beam and divide the laser beam into N paths, where N is an integer from 2 to 1000, each laser beam in each path is amplified from a first energy level to a second energy level, and each laser beam in each path is phase matched to a predetermined characteristic;
a combiner device configured to receive the N laser beams and configured to spatially combine the N laser beams into an amplified beam;
an auxiliary device coupled to the combiner device, and configured to shape the amplified pulse from a first Gaussian profile into a second Gaussian profile;
a Fabry Perot cavity configured to receive the amplified pulse, and comprising a first mirror device and a second mirror device, and a free space defined between the first mirror device and the second mirror device to form a pair of mirror devices such that the amplified pulse propagating from the pulse laser device increases in energy intensity from a first intensity to a second intensity to an Mth intensity for M cycles of the amplified beam propagating between the pair of mirror devices, where M is greater than 10,000 cycles.

16. The system of claim 15 further comprising a detection device coupled to a portion of one of the mirror devices, the detection device is configured to measure a signal from the amplified pulse to detect a phase and a shape of the amplified beam; and an optical mode filter spatially disposed within a region of the Fabry Perot cavity, and configured to reflect a parasitic optical mode from the Fabry Perot cavity to maintain a fundamental or lower harmonic optical mode in the Fabry Perot cavity; wherein the predetermined characteristic is selected from a polarization, a spatial orientation, a phase, or a frequency.

17. The system of claim 15 further comprising a charge coupled device (CCD) camera coupled to a portion of one of the mirror devices, the CCD camera is configured to measure a signal from the beam; wherein the beam is a continuous or pulsed laser.

18. The system of claim 15 further comprising a controller system coupled to the pulse laser device and coupled to a detection device.

19. The system of claim 15 further comprising a controller system coupled to the laser device and a detection device such that a feedback signal is detected from the detection device and sent to the controller device to adjust a phase, shape, and focus of the laser beam from the laser device.

20. The system of claim 15 further comprising a controller system coupled to the laser device and a detection device such that a feedback signal from the amplified beam is detected from the detection device and sent to the controller device to adjust a phase, shape, and focus of the laser beam from the laser device to adjust for a deformation of either pair of mirrors.

21. The system of claim 15 further comprising a controller system coupled to the laser device and a detection device such that a feedback signal from the amplified beam is detected from the detection device and sent to the controller device to adjust a phase, shape, and focus of the laser beam from the laser device to adjust for a deformation of either pair of mirrors caused by the increase in energy intensity.

22. The system of claim 15 further comprising a reactor device coupled to the Fabry Perot cavity; and a dispenser device configured to inject a target into the reactor device such that the target device interacts with the amplified pulse to initiate a fusion reaction.

23. The system of claim 15 wherein the pulse laser device comprises an oscillator device coupled to an electro optic modulating configured to adjust a phase of the laser beam, and an acousto-optic modulator configured to adjust an amplitude of the laser beam before being received by the beam splitter device.

24. The system of claim 15 wherein the optical mode filter comprises a knife edge mirror configured to reflect electromagnetic radiation from the parasitic optical mode.

25. The system of claim 15 wherein the auxiliary device is an electro optic modulator configured to adjust a phase of the laser beam, and an acousto-optic modulator configured to adjust an amplitude of the laser beam before being received by the beam splitter.

26. The system of claim 15 wherein each of the first mirror device or the second mirror device is made of sapphire, quartz, or silicon carbide, or combinations.

27. The system of claim 15 wherein each of the first mirror device or the second mirror device is directly or indirectly coupled to thermal sink comprising a heat dissipation and cooling system with a water or a cooling fluid circulating system or a cooled gas cooling systems to keep a temperature at within a predetermined temperature range.
